**Europäisches Patentamt**

**European Patent Office**

**Office européen des brevets**

(19)

(11) **EP 1 218 868 B1**

(12) **EUROPÄISCHE PATENTSCHRIFT**

(45) Veröffentlichungstag und Bekanntmachung des Hinweises auf die Patenterteilung:
**05.11.2003 Patentblatt 2003/45**

(21) Anmeldenummer: **00958246.1**

(22) Anmeldetag: **16.08.2000**

(51) Int Cl.$^7$: **G08G 1/0968**

(86) Internationale Anmeldenummer:
**PCT/DE00/02745**

(87) Internationale Veröffentlichungsnummer:
**WO 01/018770 (15.03.2001 Gazette 2001/11)**

(54) **VERFAHREN ZUM BETRIEB EINES NAVIGATIONSSYSTEMS FÜR EIN KRAFTFAHRZEUG**

METHOD FOR OPERATING A NAVIGATION SYSTEM FOR A VEHICLE

PROCEDE POUR FAIRE FONCTIONNER UN SYSTEME DE NAVIGATION DESTINE A UN VEHICULE AUTOMOBILE

(84) Benannte Vertragsstaaten:
**DE FR GB IT**

(30) Priorität: **08.09.1999 DE 19942847**

(43) Veröffentlichungstag der Anmeldung:
**03.07.2002 Patentblatt 2002/27**

(73) Patentinhaber: **ROBERT BOSCH GMBH**
**70442 Stuttgart (DE)**

(72) Erfinder:
- **LAU, Stefan**
  **Pomona, MI 10970 (US)**
- **SCHMIDT, Heinrich**
  **D-31199 Diekholzen (DE)**
- **HOFFMANN, Ralf**
  **D-31137 Hildesheim (DE)**

(56) Entgegenhaltungen:
EP-A- 0 292 897          EP-A- 0 702 210
DE-A- 19 815 141         US-A- 5 878 368

## Beschreibung

Die Erfindung betrifft ein Verfahren zum Betrieb eines Navigationssystems für eine Kraftfahrzeug, insbesondere für ein Kraftfahrzeug, mit den im Oberbegriff des Anspruchs 1 genannten Merkmalen.

Stand der Technik

Es ist bekannt, Kraftfahrzeuge mit Navigationssystemen auszurüsten, die dem Fahrzeugführer eine Fahrtroute in Form einer akustischen oder visuellen Meldung zur Verfügung stellen können. Zur Berechnung der Fahrtroute greift das Navigationssystem im allgemeinen auf eine digital hinterlegte Straßenkarte zurück, die auch eine Gliederung eines Straßentyps (zum Beispiel Autobahn oder Landstraße) enthält. Weiterhin müssen Fahrtziel und Standort des Kraftfahrzeuges bekannt sein. Das Fahrtziel wird durch den Fahrzeugführer über eine geeignete Eingabeeinrichtung in das Navigationssystem eingegeben. Die Standortbestimmung kann in bekannter Weise, beispielsweise durch Funkortung, erfolgen. Mit Hilfe dieser Eingangsgrößen Läßt sich in einfacher Weise die Fahrtroute mit der geringsten Fahrtzeit bestimmen.

Um zusätzlich die aktuelle Verkehrslage zu berücksichtigen, ist es weiterhin bekannt, laufend Verkehrsinformationen über eine Empfängereinheit zu erfassen (zum Beispiel als RDS/TMC oder GSM-Signale). Die Verkehrsinformation beinhaltet Angaben über die Art der Verkehrsstörung (Störungsereignis), beispielsweise Stau, stockender, dichter oder reger Verkehr als auch über die Länge der Verkehrsstörung. In bekannten Navigationssystemen wird das Störungsereignis in Form eines Gewichtungsfaktors berücksichtigt, der mit einer ansonsten auf diesem Straßentyp möglichen Durchschnittsgeschwindigkeit multipliziert wird. Über die Länge der Verkehrsstörung ergibt sich damit eine neue Fahrtzeit für die bestehende Fahrtroute. Diese Fahrtzeit wird laufend mit einer Fahrtzeit für zumindest eine Alternativroute verglichen und für den Fall, daß die Fahrtzeit der Alternativroute kürzer ist als die Fahrtzeit der Fahrtroute, wird die Alternativroute dem Fahrzeugführer angezeigt. Ein solches Navigationssystem ist zum Beispiel aus EP 0 702 210 A2 bekannt.

Nachteilig an einem solchen Verfahren ist, daß ein subjektives Empfinden des Fahrzeugführers hinsichtlich der zu erwartenden Verkehrsstörung nur unzureichend berücksichtigt wird. So empfinden verschiedene Fahrzeugführer dieselbe Verkehrsstörung bekanntermaßen höchst unterschiedlich. Für viele Fahrzeugführer stellt beispielsweise das Fahren in einem Stau eine Streßsituation dar, die sie auch unter Inkaufnahme einer insgesamt längeren Fahrtzeit vermeiden würden.

Vorteile der Erfindung

Erfindungsgemäß ist ein Verfahren zum Betrieb des Navigationssystems mit den Merkmalen des Anspruchs 1 vorgesehen. Dadurch, daß ein Korrekturwert K für die Gewichtungsfaktoren $G_f$ anhand der Länge der Verkehrsstörung $L_s$ ermittelt wird, und in Abhängigkeit von dem Korrekturwert K ein korrigierter Gewichtungsfaktor $G_k$ ermittelt wird, der zur Berechnung der neuen Fahrtzeit t dient, ist es möglich, individuell das Navigationssystem dem subjektiven Empfinden des Fahrzeugführers anzupassen. Insbesondere kann das subjektive Empfinden der Fahrzeugführer in geeigneter Weise bei der Berechnung von Alternativrouten berücksichtigt werden.

Der Korrekturwert K kann anhand eines Kennfeldes oder einer vorgegebenen Formel bestimmt werden. So läßt sich vorzugsweise der korrigierte Gewichtungsfaktor $G_k$ nach der Formel

$$G_k = G_f \cdot K$$

mit

$$K = L_s / n * 100$$

bestimmen, wobei $n \geq 1$ ist und für den Fall, daß $G_k \leq 0$ wird, automatisch eine Alternativroute berechnet wird. Indem der Fahrzeugführer den Wert für n bestimmt, kann sein subjektives Empfinden hinsichtlich der Länge der Verkehrsstörung $L_s$ berücksichtigt werden.

Weitere vorteilhafte Ausgestaltungen der Erfindung ergeben sich aus den übrigen, in den Unteransprüchen genannten Merkmalen.

Beschreibung des Ausführungsbeispiels

Die Erfindung wird nachfolgend anhand eines Ausführungsbeispiels näher erläutert.

Moderne Fahrzeuge, insbesondere Kraftfahrzeuge, beinhalten Navigationssysteme. Derartige Navigationssysteme umfassen mehrere Komponenten wie eine Standortermittlung, eine Rechenschaltung mit geeignetem Datenspeicher, einer Eingabeeinrichtung und eine Ausgabeeinrichtung für visuelle oder akustische Signale. Ferner kann solchen Navigationssystemen eine Empfängereinheit für Verkehrsinformationen zugeordnet werden.

Die Standortermittlung des Kraftfahrzeugs kann in bekannter Weise durch Funkortung erfolgen. Ebenfalls bekannt ist es, in dem Datenspeicher eine digitale Straßenkarte zu hinterlegen. Derartige digitale Straßenkarten beinhalten unter anderem auch Informationen über einen Straßentyp (zum Beispiel Autobahn oder Landstraße) und die dort mögliche durchschnittliche Geschwindigkeit. Die durchschnittliche Geschwindigkeit für eine Fahrt auf der Autobahn kann beispielsweise auf 130 Stundenkilometer festgelegt werden.

Der Fahrzeugführer muß ein Fahrtziel über die Eingabevorrichtung dem Navigationssystem vorgeben. Anhand des Fahrtziels, des Standortes des Kraftfahrzeuges, und der digitalen Straßenkarte wird innerhalb der Rechenschaltung eine Fahrtroute bestimmt, die die kürzeste Fahrtzeit t aufweist. Anschließend wird die Fahrtroute dem Fahrzeugführer in visueller oder akustischer Form über die Ausgabeeinrichtung zur Verfügung gestellt.

Erfindungsgemäß wird zur Festlegung der Fahrtroute oder zur Ausgabe von Alternativrouten noch zusätzlich ein subjektives Empfinden des Fahrzeugführers hinsichtlich der Länge einer möglichen Verkehrsstörung $L_s$ berücksichtigt. Zunächst muß dazu über die Empfängereinheit eine die Fahrtroute betreffende Verkehrsinformation erfaßt werden. Dies kann in bekannter Weise, beispielsweise anhand von RDS/TMC oder GSM-Signalen, erfolgen.

Die Verkehrsinformation umfaßt Angaben zur Länge der Verkehrsstörung $L_s$ als auch über das Störungsereignis selbst. Den einzelnen Störungsereignissen werden dabei zunächst Gewichtungsfaktoren $G_f$ zugeordnet. So kann beispielsweise dem Störungsereignis "Stau" ein Gewichtungsfaktor von 0,1, dem Störungsereignis "stockender Verkehr" ein Gewichtungsfaktor $G_f$ von 0,25 und dem Störungsereignis "reger Verkehr" ein Gewichtungsfaktor $G_f$ von 0,9 zugeordnet werden. Mit Hilfe der Gewichtungsfaktoren $G_f$ und der Länge der Verkehrsstörung $L_s$ wird hierüber eine neue Fahrtzeit t für die bestehende Fahrtroute ermittelt. Gleichzeitig wird eine Fahrtzeit $t_a$ für eine Alternativroute in gleicher Weise berechnet und für den Fall, daß die Fahrtzeit $t_a$ der Alternativroute kürzer ist als die Fahrtzeit t der Fahrtroute, dem Fahrzeugführer angezeigt.

Im erfindungsgemäßen Verfahren wird ein Korrekturwert K für die Gewichtungsfaktoren $G_f$ anhand der Länge der Verkehrsstörung $L_s$ ermittelt und in Abhängigkeit von dem Korrekturwert K ein korrigierter Gewichtungsfaktor $G_k$ berechnet, der letztendlich zur Berechnung der neuen Fahrtzeit t dient. Der Korrekturwert K kann entweder einem Kennfeld entnommen werden, bei dem bestimmte Korrekturwerte K der Länge der Verkehrsstörung $L_s$ zugeordnet werden oder er kann anhand einer vorgegebenen Formel berechnet werden.

Im letzteren Fall wird der korrigierte Gewichtungsfaktor $G_k$ nach der Formel

$$G_k = G_f - K \qquad \text{(I)}$$

mit

$$K = L_s / 100n \qquad \text{(II)}$$

berechnet. Dabei ist $n \geq 1$ und für den Fall, daß $G_k \leq 0$ ist, wird automatisch eine Alternativroute ausgegeben.

Der Fahrzeugführer kann durch Wahl eines Wertes für n bestimmen, inwieweit sein subjektives Empfinden bei der Berechnung alternativer Fahrtrouten berücksichtigt wird. Mit zunehmendem Wert n steigt auch die Fahrtzeit t beim Vorliegen einer gegebenen Länge einer Verkehrsstörung $L_S$. So kann beispielsweise einem relativ ungeduldigen Fahrzeugführer, der Verkehrsstörung wie einen Stau als eine Streßsituation empfindet, sehr viel eher eine Alternativroute angeboten werden. Der Fahrzeugführer muß lediglich den Wert n genügend hoch festlegen.

Zur Verdeutlichung wird nachfolgend das erfindungsgemäße Verfahren zur Ermittlung der neuen Fahrtzeit t an einem Beispiel mit einem herkömmlichen Verfahren verglichen. Eingangsgrößen sind eine Gesamtstrecke $L_A$ von 30 km auf der Autobahn, eine Durchschnittsgeschwindigkeit v von 130 km/h, eine Länge der Verkehrsstörung $L_S$ von 10 km, ein Gewichtungsfaktor $G_f$ für den Stau von 0,1 und ein Wert für n = 2. Damit ergibt sich für das herkömmliche Verfahren eine Fahrtzeit von

$$t = \frac{L_A - L_S}{v} + \frac{L_S}{v * G_f} = 55{,}4 \text{ min.} \qquad \text{(III)}$$

Demgegenüber ist die Fahrtzeit t beim erfindungsgemäßen Verfahren

$$t = \frac{L_A - L_S}{v} + \frac{L}{v * G_k} = 101{,}5 \text{ min.} \qquad \text{(IV)}$$

mit

$$G_k = G_f - K = G_f - \frac{L_S}{100n} = 0{,}05. \qquad \text{(V)}$$

Die Differenz von über 45 Minuten in den Fahrtzeiten führt damit schneller zur Ausgabe einer Alternativroute.

**Patentansprüche**

1. Verfahren zum Betrieb eines Navigationssystems für ein Fahrzeug, insbesondere für ein Kraftfahrzeug, bei dem in einer Rechenschaltung anhand eines Standorts des Fahrzeugs, einer digital hinterlegten Straßenkarte und eines Zielorts eine Fahrtroute berechnet und dem Fahrzeugführer als akustische und/oder visuelle Meldung zur Verfügung gestellt wird,
wobei
über eine Empfängereinheit eine die Fahrtroute betreffende Verkehrsinformation erfaßt werden kann und eine hieraus resultierende neue Fahrtzeit (t) für die bestehende Fahrtroute anhand eines Gewichtungsfaktors für ein Störungsereignis und der Länge einer Verkehrsstörung (L$_s$) berechnet wird, eine Fahrtzeit (t$_a$) für eine Alternativroute in gleicher Weise berechnet wird und für den Fall, daß die Fahrtzeit (t$_a$) kürzer ist als die neue Fahrtzeit (t) der Fahrtroute, die Fahrtzeit (t$_a$) der Alternativroute und/oder die Alternativroute dem Fahrzeugführer als akustische und/oder visuelle Meldung zur Verfügung gestellt wird, **dadurch gekennzeichnet, daß** ein Korrekturwert (K) für vorgegebene Gewichtungsfaktoren (G$_f$) anhand der Länge der Verkehrsstörung (L$_s$) ermittelt wird und in Abhängigkeit von dem Korrekturwert (K) ein korrigierter Gewichtungsfaktor (G$_k$) ermittelt wird, der zur Berechnung der neuen Fahrtzeit (t) dient.

2. Verfahren nach Anspruch 1, **dadurch gekennzeichnet, daß** der Korrekturwert (K) anhand eines Kennfeldes oder einer vorgegebenen Formel bestimmt wird.

3. Verfahren nach Anspruch 2, **dadurch gekennzeichnet, daß** der korrigierte Gewichtungsfaktor (G$_k$) nach der Formel

$$G_k = G_f - K$$

mit

$$K = L_s / 100 * n$$

berechnet wird, wobei G$_k$ der korrigierte Gewichtungsfaktor, G$_f$ der vorgegebene Gewichtungsfaktor für ein Störungsereignis, K der Korrekturwert und L$_s$ die Länge einer Verkehrsstörung ist, und wobei n $\geq$ 1 ist und für den Fall, daß G$_k \leq$ 0 ist, automatisch eine Alternativroute berechnet wird.

4. Verfahren nach Anspruch 3, **dadurch gekennzeichnet, daß** der Fahrzeugführer sein subjektives Empfinden hinsichtlich der Länge der Verkehrsstörung (L$_s$) in das Navigationssystem eingeben kann, indem er den Wert für n bestimmt, wobei mit zunehmendem n die Fahrtzeit (t) steigt und damit die Ausgabe einer Alternativroute und/oder der Fahrtzeit (t$_a$) der Alternativroute wahrscheinlicher wird.

**Claims**

1. Method for operating a navigation system for a vehicle, in particular for a motor vehicle, in which a route is calculated in a computing circuit by reference to a location of the vehicle, a digitally stored road map and a destination, and is made available to the driver of the vehicle as an audible and/or visual message, a traffic information item which relates to the route can be acquired by means of a receiver unit and a new travel time (t) for the existing route which results from said traffic information item is calculated by means of a weighting factor for a disruption event and the length of an instance of traffic disruption (L$_s$), a travel time (t$_a$) for an alternative route is calculated in the same way and if the travel time (t$_a$) is shorter than the new travel time (t) of the route, the travel time (t$_a$) of the alternative route and/or the alternative route are made available to the driver of the vehicle as an audible and/or visual message, **characterized in that** a correction value (K) for predefined weighting factors (G$_f$) is determined by reference to the length of the traffic disruption (L$_s$) and a corrected weighting factor (G$_k$), which is used to calculate the new travel time (t), is determined as a function of the correction value (K).

2. Method according to Claim 1, **characterized in that** the correction value (K) is determined by reference to a characteristic diagram or a predefined formula.

3. Method according to Claim 2, **characterized in that** the corrected weighting factor (G$_k$) is calculated according to the formula

$$G_k = G_f - K$$

where

$$K = L_s / 100 * n,$$

G$_k$ being the corrected weighting factor, G$_f$ being the predefined weighting factor for a disruption event, K being the correction value and L$_s$ being the length of an instance of traffic disruption, and n $\geq$ 1, and if G$_k \leq$ 0, an alternative route is calculated automatically.

4. Method according to Claim 3, **characterized in that** the driver of the vehicle can input his subjective feelings with respect to the length of the traffic disruption (L$_s$) into the navigation system by determining the value for n, the traffic time (t) rising as n increases, and the outputting of an alternative route and/or the travel time (t$_a$) of the alternative route thus becoming more probable.

**Revendications**

1. Procédé de mise en oeuvre d'un système de navigation d'un véhicule, notamment d'un véhicule automobile, selon lequel un circuit de calcul effectue le calcul à l'aide de l'emplacement du véhicule, d'une carte routière enregistrée de manière numérique et d'une destination, un trajet fourni au conducteur sous une forme acoustique et/ ou optique, selon lequel :

   une unité d'entrée saisit l'information de circulation concernant le trajet et calcule à partir de là un nouveau temps de trajet (t) pour le trajet à effectuer à l'aide d'un coefficient de pondération pour un signal perturbateur et la longueur de la perturbation de circulation ($L_S$) ;
   on calcule de la même manière un trajet ($t_a$) pour un trajet alternatif et au cas où le temps de trajet ($t_a$) est plus court que le nouveau temps de trajet (t), le temps de trajet ($t_a$) du trajet alternatif et/ou le trajet alternatif est communiqué au conducteur sous la forme d'une information acoustique et/ ou optique,

   **caractérisé par**
   un coefficient de correction (K) pour des coefficients de pondération prédéterminés ($G_f$) à l'aide duquel on détermine la longueur de la perturbation de circulation ($L_S$) et en fonction de cette valeur de correction (K) on détermine un coefficient de pondération corrigé ($G_k$) servant à calculer le nouveau temps de trajet (t).

2. Procédé selon la revendication 1,
   **caractérisé en ce qu'**
   on détermine la valeur de correction (K) à l'aide d'un champ de caractéristiques ou d'une formule prédéterminée.

3. Procédé selon la revendication 2,
   **caractérisé en ce qu'**
   on calcule le coefficient de pondération corrigé ($G_k$) selon la formule

$$G_k = G_f - K$$

   avec

$$K = L_s/100 * n \; ;$$

   formule dans laquelle $G_k$ est le coefficient de pondération corrigé, $G_f$ le coefficient de pondération prédéterminé pour un événement perturbateur, K la valeur de correction et $L_s$ la longueur de la perturbation de circulation, avec $n \geq 1$, et au cas où $G_f \leq$ 0 on calcule automatiquement un trajet alternatif.

4. Procédé selon la revendication 3,
   **caractérisé en ce que**
   le conducteur introduit sa perception subjective de la longueur de la perturbation de circulation ($L_S$) dans le système de navigation en déterminant la valeur (n), le temps de trajet (t) augmentant avec la valeur (n) et ainsi l'émission d'un trajet alternatif et/ ou du temps de trajet ($t_a$) du trajet alternatif devient plus probable.